# EUROPÄISCHE PATENTSCHRIFT

(11) **EP 3 286 528 B1**
(45) Veröffentlichungstag und Bekanntmachung des Hinweises auf die Patenterteilung: **23.10.2019**
(21) Anmeldenummer: 16711827.2
(22) Anmeldetag: 24.03.2016
(51) Int. Cl.: G01F 1/66, G10K 11/00

(54) **ANORDNUNG UND ULTRASCHALL-DURCHFLUSSMESSGERÄT**
ARRRANGEMENT AND ULTRASONIC FLOW METER
DISPOSITION ET DÉBITMÈTRE ULTRASONIQUE

(30) Priorität: 24.04.2015 DE 102015106352
(43) Veröffentlichungstag der Anmeldung: 28.02.2018
(73) Patentinhaber: Endress+Hauser Flowtec AG, 4153 Reinach (CH)
(72) Erfinder: LIN, Yaoying, 85356 Freising (DE); RIEDER, Alfred, 84032 Landshut (DE); DRAHM, Wolfgang, 85435 Erding (DE); BEZDEK, Michal, 4147 Aesch (CH); UEBERSCHLAG, Pierre, 68300 Saint-Louis (FR)
(74) Vertreter: Andres, Angelika Maria
(86) Internationale Anmeldenummer: PCT/EP2016/056594
(87) Internationale Veröffentlichungsnummer: WO 2016/169729

(56) Entgegenhaltungen:
- EP-A1- 1 046 886
- EP-A1- 1 340 964
- EP-A2- 1 096 237
- EP-A2- 2 148 322
- DE-A1-102009 046 144
- DE-U1-202013 101 798

## Beschreibung

Es ist eine Anordnung eines Ultraschallwandlers mit einem Filterelement aus der EP 1 340 964 A1 bekannt. Diese Anordnung weist allerdings eine signalabstrahlende Biegeplatte auf, welche randseitig den Körperschall in das Filterelement einspeist. Dadurch wird das Ultraschallsignal zwar in der Mitte zentriert, allerdings ist die abstrahlende Fläche sehr gering. Zudem ist eine radiale Abstützung des Filterelements und eine Anordnung in einem Gehäuse nicht gezeigt.

Es ist daher Aufgabe der vorliegenden Erfindung das Filterelement in einem Gehäuse, z.B. einem Messrohrstutzen, mit einem mediumsdichten Teilsegment anzuordnen, in welchem der Körperschall nicht an den abdichtenden Stellen übertragen wird.

Die vorliegende Erfindung löst diese Aufgabe durch eine Anordnung mit den Merkmalen des Anspruchs 1.

Eine erfindungsgemäße Anordnung umfasst eine Gehäusewandung, einen Ultraschallwandler und ein Dämpfungselement gemäß dem unabhängigen Anspruch 1.

Als Ultraschallwandler ist vorzugsweise nicht ausschließlich als ein ultraschallerzeugendes Element zu verstehen. Ein Ultraschallwandler beschränkt sich diesbezüglich nicht ausschließlich auf Piezoelemente oder andere ultraschallerzeugende Elemente sondern kann auch den Bereich der Anordnung umfassen, welchen das Ultraschallsignal vor Eintritt in das Medium durchqueren muss. Der Ultraschallwandler weist eine Oberfläche auf, an welcher ein Ultraschallsignal auf einem vorbestimmten Signalpfad an das Messmedium abgegeben wird. Alle zwischen dem ultraschallerzeugenden Element und dieser Oberfläche befindlichen Schichten und Bauelemente sind Teil des Ultraschallwandlers. Beim Ultraschall-Wandler handelt es sich somit Element, welches ein Ultraschallsignal an das Messmedium abgibt. Dies kann z.B. eine oder mehrere Koppelschichten oder Anpassungsschichten umfassen. Besonders bevorzugt kann z.B. ein metallischer Aufsatz Teil des Ultraschallwandlers sein, von welchem aus ein Ultraschallsignal in ein gasförmiges oder flüssiges Medium ausgesandt wird. Besonders bevorzugt ist dieser metallische Aufsatz mittels einer Fügestelle mit dem Dämpfungselement verbunden.

Von der Oberfläche werden Ultraschallsignale in ein gasförmiges oder flüssiges Medium ausgesandt. Dies kann im Fall eines Durchflussmessgerätes ein Messmedium sein oder bei der Füllstandsmessung z.B. Luft.

Die Gehäusewandung kann z.B. ein Stutzen auf einem Messrohr eines Ultraschall-Durchflussmessgerätes sein. Der Stutzen bildet dabei das Gehäuse für den Ultraschallwandler. Es kann aber auch zu einem fest oder lösbar mit einem Tank verbundenen Füllstandmessgerät gehören.

Das Dämpfungselement kann auch als Bandpassfilter bezeichnet werden. Es dient der Körperschalldämpfung, bzw. der Körperschallentkopplung, zur Gehäusewandung hin. Das Dämpfungselement ist vorzugsweise hohlzylindrisch ausgebildet und weist eine endständige Stirnfläche auf, an welcher sich der Ultraschallwandler mittels einer Schnittstelle anschließt.

Schwingungsknoten einer stehenden Welle sind an sich bekannt. Es ist daher für den Fachmann verständlich, dass entsprechende Schwindungsknoten sich erst bei Einwirkung von Körperschall, also im Betrieb des Ultraschallwandlers, ausbilden. Auf Höhe bedeutet dass der Dichtring auf der gleichen axialen Position entlang der Längsachse des Dämpfungselements angeordnet ist wie der Schwingknotenpunkt und von der Längsachse radial beabstandet ist.

Es hat sich gezeigt, dass eine Positionierung eines Dichtrings nicht etwa an der Stelle mit dem größten Schwingungsausschlag sondern an die Stelle eines Schwingungsknotenpunktes eine reduzierte seitliche Übertragung des von Körperschall zur Gehäusewandung hin ermöglicht. Zugleich wird eine mechanische Abstützung des Dämpfungselements im Bereich der Mantelfläche des Dämpfungselements gewährleistet.

Vorteilhafte Ausgestaltungen der Erfindung sind Gegenstand der Unteransprüche.

Das Dämpfungselement weist vorteilhaft eine hohlzylindrische und rotationssymmetrische Grundform auf, so dass sich eine gleichmäßige stehende Welle bei axialem Einleiten eines Körperschalls ausbildet.

Um eine weitere vorteilhafte Auslöschung des Körperschalls zu erreichen ist es von Vorteil, wenn das Dämpfungselement endständig auf einem Torus oder einem kugelförmigen Formkörper aufsitzt.

Zur besseren seitlichen Abstützung des Dämpfungselements ist es von Vorteil, wenn die Anordnung zudem zwischen dem Dämpfungselement und der Gehäusewandung ein Dichtelement, insbesondere ein rotationssymmetrisches Dichtelement, aufweist, welches sich über einen Bereich von zumindest 20% der Länge des Dämpfungselements zwischen dem Dämpfungselement und der Gehäusewandung erstreckt, wobei der erste Dichtring zwischen dem Dichtelement und dem Dämpfungselement angeordnet ist.

Um eine Verhinderung der seitlichen Schallübertragung an zwei Stellen zu erreichen ist es von Vorteil die Anordnung einen zweiten Dichtring aufweist, welcher zwischen dem Dichtelement und der Gehäusewandung auf Höhe eines Schwingungsknotenpunktes des Dämpfungselements angeordnet ist.

Eine Torusform ist besonders günstig zur Auslöschung des Schalls, da die Schallwellen in alle Richtungen gleichmäßig zerstreut werden. Daher ist es von Vorteil, wenn der Dichtring ein Rundschnurprofil aufweist.

Eine besonders effektive Auslöschung des Körperschalls auf einem Schallpfad welcher längs durch das Dämpfungselement verläuft, wird dann erreicht, wenn das Dämpfungselement zumindest eine, vorzugsweise zumindest zwei, Ringnuten aufweist. Oberhalb und unterhalb der Ringnut, insbesondere jedoch zwischen den Ringnuten kann ein Ringmassesegment vorgesehen sein.

Die Anordnung weist in einem endständigen Bereich des Dämpfungselements einen geschlossenen Hohlraum, wobei der erste Dichtring vorgesehen ist, um den Eintritt eines Messmediums in diesen Hohlraum zu verhindern. In diesem Hohlraum können z.B. die Anschlussleitungen für das schallerzeugende Element des Ultraschallwandlers angeordnet und entsprechend vor dem Messmedium geschützt sein.

Die Härte des ersten und/oder des zweiten Dichtringes beträgt nach DIN EN ISO 868 und/oder DIN ISO 7619-1 60-80 ShA, vorzugsweise 65-75 ShA. Das übliche Prüfverfahren nach Shore-A für Weichelastomere ist allgemein bekannt und wird zum Nachweis der vorgenannten Shorehärten angewandt.

Das Material des Dichtrings ist vorzugsweise ein siliziumbasierter elastomerer Kunststoff, insbesondere Silikon.

Die erfindungsgemäße Anordnung kann in einem Feldgerät der Prozessmesstechnik, insbesondere in einem Ultraschall-Durchflussmessgerät zur Messung von gasförmigen Medien, vorgesehen sein. Das Ultraschall-Durchflussmessgerät weist ein Messrohr auf, an welchem eine Anordnung nach Anspruch 1 angebracht ist.

Die Durchflussmessung kann mittels des Dopplerprinzip nur mit einer Anordnung erfolgen oder mittels des Laufzeitdifferenzprinzips durch zwei Anordnungen erfolgen.

Alternativ kann die Anordnung auch in einem Füllstandsmessgerät eingesetzt werden, wobei das Messrohr dabei jedoch meist durch ein Vorratsgefäß - z.B. einen Tank oder ein Silo ersetzt ist. Auch andere Feldgeräte aus dem Bereich der Prozessmesstechnik sind für den Einsatz der Anordnung sind denkbar.

Die vorliegende Erfindung wird nachfolgend anhand der beigefügten Zeichnungen näher erläutert:

Es zeigen:
Fig. 1 eine nicht-erfindungsgemäße Anordnung umfassend einen Ultraschallwandler und ein Dämpfungselement;
Fig. 2 eine erste erfindungsgemäße Anordnung umfassend einen Ultraschallwandler und ein Dämpfungselement;
Fig. 3 eine schematische Darstellung der Körperschallschwingungen des Dämpfungselements der Fig. 2;
Fig. 4 eine weitere schematische Darstellung der Körperschallschwingungen des Dämpfungselements der Fig. 2;
Fig. 5 eine schematische Darstellung der Körperschallschwingungen einer weiteren nichterfindungsgemäßen Ausführungsvariante eines Dämpfungselements; und
Fig. 6 eine schematische Darstellung der Körperschallschwingungen einer zweiten erfindungsgemäßen Ausführungsvariante eines Dämpfungselements.

Die vorliegende Anordnung kann sowohl bei Füllstandmessgeräten als auch bei Durchflussmessgeräten eingesetzt werden. Nachfolgend wird jedoch der Aufbau, die Funktionsweise und die daraus resultierenden Vorteile vorwiegend für ein Ultraschall-Durchflussmessgerät beschrieben. Die Argumente lassen sich jedoch überwiegend auch auf die Ultraschall-Füllstandsmessung übertragen.

Ultraschall-Durchflussmessgeräte werden vielfach in der Prozess- und Automatisierungstechnik eingesetzt. Sie erlauben in einfacher Weise, den Volumendurchfluss und/oder Massendurchfluss eines Messmediums in einer Rohrleitung zu bestimmen. Die bekannten Ultraschall-Durchflussmessgeräte arbeiten häufig nach dem Laufzeitdifferenz Prinzip. Beim Laufzeitdifferenz-Prinzip werden die unterschiedlichen Laufzeiten von Ultraschallwellen, insbesondere Ultraschallimpulsen, so genannten Bursts, relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fliessgeschwindigkeit und damit bei bekanntem Durchmesser des Rohrleitungsabschnitts der Volumendurchfluss bestimmen.

Die Ultraschallwellen werden mit Hilfe so genannter Ultraschallwandler erzeugt bzw. empfangen. Hierfür sind Ultraschallwandler mit der Rohrwandung des betreffenden Rohrleitungsabschnitts fest verbunden. Dieser Gerätetyp ist in Fachkreisen auch als Inline-Ultraschalldurchflussmessgerät bekannt. Es sind auch Clamp-on-Ultraschall-Durchflussmesssysteme erhältlich, welche von außen an das Messrohr angebracht, z.B. aufgeschnallt, werden. Clamp-On Ultraschall-Durchflussmessgeräte sind jedoch nicht Gegenstand der vorliegenden Erfindung

Die Ultraschallwandler weisen normalerweise aus einem elektromechanischen Wandlerelement, z.B. ein oder mehrere piezoelektrische Elemente auf

Sowohl bei Clamp-On-Systemen, als auch bei Inline-Systemen sind die Ultraschallwandler in einer gemeinsamen Ebene am Messrohr angeordnet, entweder auf gegenüberliegenden Seiten des Messrohrs, dann verläuft das akustische Signal, projiziert auf einen Rohrquerschnitt, einmal entlang einer Sekante durch das Messrohr, oder auf derselben Seite des Messrohrs, dann wird das akustische Signal an der gegenüberliegenden Seite des Messrohrs reflektiert, wodurch das akustische Signal zweimal das Messrohr entlang der auf den Querschnitt durch das Messrohr projizierten Sekante durchquert.

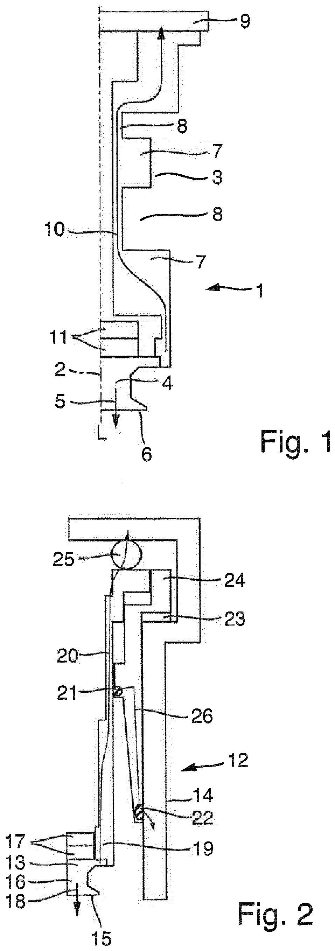

Im konkreten Ausführungsbeispiel der Fig. 1 ist eine Anordnung 1 mit einem entsprechenden Ultraschallwandler 2 mit zwei übereinander-angeordneten elektromechanischen Wandlerelementen 11, insbesondere mit zwei Piezoelementen, ausgestaltet. Es ist jedoch auch möglich an gleicher Stelle nur ein Wandlerelement vorzusehen. Der Ultraschallwandler 2 weist zudem einen Aufsatz 4 mit einer mediumsberührenden Oberfläche 6 auf. An dieser Oberfläche 6 werden die durch das oder die elektromechanischen Wandlerelemente 11 erzeugten Ultraschallwellen an ein Messmedium abgegeben.

Der in Fig. 1 dargestellte Aufsatz 4 weist einen Sockel auf, welcher in Kontakt, insbesondere in formschlüssigen Kontakt, mit den elektromechanischen Wandlerelementen 2 steht. Weiterhin weist der Aufsatz 4 eine Biegeplatte 5 auf mit der mediumsberührenden Oberfläche 6 auf.

Der Sockel des Aufsatzes 4 weist eine Schnittstelle zu einem Dämpfungselement 3 auf. Dieses Dämpfungselement 3 ist als ein zylindrischer Körper ausgebildet mit zumindest zwei parallel zueinander verlaufenden Ringnuten 8. Die Schnittstelle zwischen dem Ultraschallwandler 2 und dem Dämpfungselement 3 kann z.B. als eine Schweißverbindung ausgebildet sein.

Zwischen der Schnittstelle und einer ersten der beiden Ringnuten 8 ist ein erstes Ringmassesegment 7 angeordnet, welches eine größere Wanddicke, insbesondere zumindest eine doppelt so starke Wanddicke aufweist, wie die erste der beiden Ringnuten 8.

Zwischen diesen beiden Ringnuten 8 ist zudem ein zweites Ringsegment 7 angeordnet, welches eine größere Wanddicke, insbesondere zumindest eine doppelt so starke Wanddicke aufweist, wie die Ringnuten 8.

Das Dämpfungselement 3 weist eine weitere Schnittstelle auf, an welcher das Dämpfungselement 3 an die Wandung 9 eines Gehäuses oder eines Rohres fixiert wird. In Fig. 1 ist zudem der Weg des Körperschalls schematisch eingezeichnet, welcher durch das Dämpfungselement verläuft und welcher durch das dargestellte Dämpfungselement 3 im guten Maße verringert wird. Solange die in Fig. 1 dargestellte Anordnung nur endseitig fixiert ist, stellt die Anordnung ein zufriedenstelle Entkopplung der Anschlussstelle, also des Rohres oder des Gehäuses von dem Ultraschallwandler dar. Im Durchflussbereich oder auch in anderen Anwendungsbereichen kann es allerdings sein, dass die Anordnung zurückgesetzt in einem Gehäuse oder einer Rohrleitung angeordnet ist. Dies ist z.B. bei der Durchflussmessung der Fall, wo die Anordnung 1 bzw. das Sensorelement zurückversetzt in einem endständig geschlossenen Stutzen oder einer ähnlichen Vorrichtung angeordnet sein kann, damit die Strömung nicht zu stark behindert wird.

Bei derartigen Anordnungen kann es bei einer rein endständigen Anordnung zu einer Ablagerung von Verunreinigungen im Bereich zwischen der Gehäusewandung und dem Dämpfungselement kommen. Daher empfiehlt es sich in diesen Bereichen Dichtkörper, also Dichtringe und/oder andere raumfüllende Dichtelemente vorzusehen, um den Zwischenbereich zwischen der Gehäusewand und dem Dämpfungselement abzudichten. Die sich daraus ergebenden Probleme und deren Lösung werden nachfolgend anhand der Fig. 2-6 näher erörtert

Fig. 2 zeigt ein erfindungsgemäßes Ausführungsbeispiel einer Anordnung 12 zur Erzeugung und/oder zum Empfangen eines Ultraschallsignals. Die Anordnung weist einen Ultraschallwandler 13, ein Dämpfungselement 19, ein Dichtelement 24 und eine Gehäusewandung 14 auf.

Der Ultraschallwandler 13 ist analog zu Fig. 1 ausgebildet. Er weist zwei übereinanderangeordnete elektromechanische Wandlerelemente 17, insbesondere zwei Piezoelemente, auf. Der Ultraschallwandler 13 weist zudem einen Aufsatz 16 mit einem Sockel und einer Biegeplatte 18 auf. Diese weist eine mediumsberührende Oberfläche 15 auf, von welcher das Ultraschallsignal in das Messmedium abgestrahlt wird.

An den Ultraschallwandler 13 schließt sich ein Dämpfungselement 19 an, welches über eine Schnittstelle mit dem Ultraschallwandler 13 verbunden ist. Das Dämpfungselement ist zylindrisch aufgebaut und weist im Unterschied zum Ausführungsbeispiel der Fig. 1 keine Ringnuten und Ringsegmente auf. Die Wandstärke des Dämpfungselements 19 variiert zwar in einigen Abschnitten, allerdings ohne dass sich aus dem Aufbau Ringnuten ergeben.

Endständig sitzt das Dämpfungselement auf einer kugelförmigen Formkörper 25 oder einem Torus auf, welche zwischen dem besagten Dämpfungselement und der Gehäusewandung 14 angeordnet ist. Unter dem Begriff "Kugel" im Sinne der vorliegenden Erfindung sind auch Abweichungen von der idealen Kreisform zu verstehen, sondern als Formkörper mit konkaver, insbesondere streng konkaver, Form. Auch eine teilweise Abplattung eines Abschnitts des Formkörpers ist möglich.

Randseitig, also zwischen der Zylindermantelfläche des Dämpfungselements 19 und der Gehäusewandung 14 ist ein Dichtelement 24 angeordnet. Dieses Dichtelement 24 liegt bereichsweise formschlüssig an der Gehäusewandung 14 an und weist ebenfalls eine bereichsweise formschlüssige Verbindung mit dem Dichtelement 24 auf. An diesen formschlüssigen Verbindungen kann auch ein Materialschluss, z.B. durch eine Schweißverbindung, erfolgen.

Es ist zudem ein Schallpfad 10 dargestellt, welcher längs durch das Dämpfungselement verläuft.

Zwischen dem Dichtelement 24 und der Gehäusewandung 14 ist im Bereich eines Knicks ein weiteres körperschalldämpfendes Element 23 angeordnet. Zwischen dem Dichtelement 24 und dem Dämpfungselement 19 als auch zwischen dem Dichtelement 24 und der Gehäusewandung 14 sind Dichtungen 21, 22, insbesondere Dichtringe angeordnet. Die Positionierung dieser Dichtringe 21 und 22 ist entscheidend für den Verlauf des Körperschalls innerhalb der Anordnung.

In Fig. 2 sind zwei Schallpfade 20 und 26 angeordnet. Der Schallpfad 20 ist der ideale Schallpfad zur Körperschallauslöschung zur Gehäusewandung 14 hin. Um allerdings ein Eindringen von Messmedium in den Zwischenraum zwischen Dämpfungselement 19 und Gehäusewandung 14 zu verhindern und zur zusätzlichen Verbesserung der mechanischen Stabilität des Dämpfungselements 19 ist das Dichtelement 24 vorgesehen, welches den Spalt zwischen dem Dämpfungselement 19 und der Gehäusewandung 14 ausfüllt. Über dieses Dichtelement 24 kann allerdings auch ein Körperschall auf die Gehäusewandung 14 über einen Schallpfad 26 übertragen werden.

Durch eine optimale Platzierung von Dichtkörpern, also des Dichtelements 24 und der Dichtringe 21, 22, kann jedoch die Übertragung des Körperschalls über den Schallpfad 26 verhindert werden.

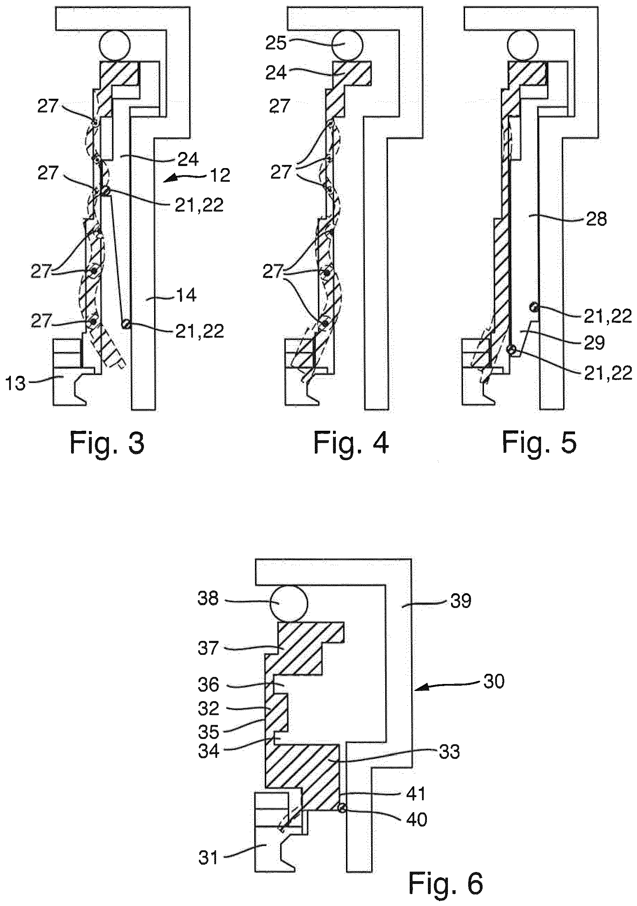

Die optimale Platzierung eines oder mehrerer Dichtkörper wird nachfolgend anhand der Fig. 3-6 näher erläutert.

Fig. 3 zeigt ein Schwingungsverhalten des Dämpfungselements 19 bei Durchleitung eines Körperschallsignals. Man erkennt, dass sich die Wandung des Dämpfungselements in axialer Richtung als eine stehende Welle ausbildet und dass einzelne Bereiche einen starken Schwingungsausschlag aufweisen, während andere Bereiche sich in Ruhelage befinden und quasi keine oder nur eine geringe Bewegungen in senkrechter Richtung zur Längsachse ausführen. Diese anderen Bereiche werden Schwingungsknoten 27 genannt.

Zu einer minimierten Schallübertragung hat es sich als günstig erwiesen, dass man einen oder mehrere Dichtringe an einem solchen Schwingungsknoten 27 platziert.

In Fig. 3 erkennt man dass der Dichtring 21 zwischen dem Dichtelement 24 und dem Dämpfungselement 19 und auf Höhe eines Knotenpunktes 27, also auf der axialen Position eines Knotenpunktes 27 angeordnet ist. Es hat sich gezeigt, dass die Platzierung eines Dichtrings 21 an einem Knotenpunkt 27 eine wesentlich geringere Schallübertragung durch den vorbeschriebenen unerwünschten Schallpfad 26 ermöglicht.

Weiterhin ist auch der Dichtring 22 zwischen dem Dichtelement 24 und der Gehäusewandung 14 auch auf Höhe eines weiteren Knotenpunktes, also auf der axialen Position des weiteren Knotenpunktes 27 angeordnet. Die Angaben beziehen sich selbstverständlich auf die Position des Knotenpunktes des Dämpfungselements 19 in der Ruhelage.

Fig. 4 zeigt nochmals das Dämpfungselement 24 ohne jeglichen Dämpfungskörper. Der Torus oder das kugelförmige Element 25 auf welchem das Dämpfungselement aufsitzt dient dabei vorzugsweise als Tiefpassfilter, insbesondere für axiale Moden.

In Fig. 5 ist ein nicht-erfindungsgemäßes Ausführungsbeispiel dargestellt, in welchem die Dichtringe 21 und 22 nicht auf Höhe von Knotenpunkten positioniert sind. Bei diesem Ausführungsbeispiel wird verglichen mit dem Ausführungsbeispiel der Fig. 3 sehr viel Körperschall an die Gehäusewandung übertragen.

Selbstverständlich kann die Erfindung auch auf andere Ausführungsbeispiele übertragen werden. So zeigt Fig. 6 ein weiteres Ausführungsbeispiel einer erfindungsgemäßen Anordnung 30 mit einem Ultraschallwandler 31, einem Dämpfungselement 32 und einer Gehäusewandung 39 sowie einem dazwischenliegenden Dichtring 40. Dieser ist auf Höhe eines Knotenpunktes angeordnet.

Weiterhin weist das Dämpfungselement, analog zum Dämpfungselement der Fig. 1, zwei Ringnuten 34 und 36 sowie mehrere Massesegmente 33, 35, 37 auf. Diese haben ein größeres Volumen bezogen auf das Gesamtvolumen des Dämpfungselements als die Ringmassesegmente des Dämpfungselements der Fig. 1. Analog zum Ausführungsbeispiel der Fig. 2-5 ist zudem ein Torus oder ein kugelförmiger Formkörper 38 endständig am Dämpfungselement 32 angeordnet.

Selbstverständlich sind viele weitere Ausführungsbeispiele im Rahmen der vorliegenden Erfindung realisierbar. Daher ist der Gegenstand der vorliegenden Erfindung nicht auf die vorbeschriebenen Ausführungsbeispiele beschränkt.

Insgesamt können die erfindungsgemäßen Anordnungen ein- oder mehrstückig aufgebaut sein. Das Dämpfungselement und der Ultraschallwandler sind rotationssymmetrisch und bestehen aus Metall. Dabei kann der Aufsatz vorzugsweise aus Edelstahl oder Titan bestehen. Das Dämpfungselement besteht vorzugsweise aus Edelstahl.

### Bezugszeichenliste

- 1: Anordnung
- 2: Ultraschallwandler
- 3: Dämpfungselement
- 4: Aufsatz
- 5: Biegeplatte
- 6: Oberfläche
- 7: Ringmassesegment
- 8: Ringnut
- 9: Gehäusewandung
- 10: Schallpfad
- 11: Wandlerelement
- 12: Anordnung
- 13: Ultraschallwandler
- 14: Gehäusewandung
- 15: Oberfläche
- 16: Aufsatz
- 17: Wandlerelement
- 18: Biegeplatte
- 19: Dämpfungselement
- 20: Schallpfad
- 21: Dichtring
- 22: Dichtring
- 23: körperschalldämpfendes Element
- 24: Dichtelement
- 25: kugelförmiger Formkörper
- 26: Schallpfad

- 27: Schwingungsknoten

- 30: Anordnung
- 31: Ultraschallwandler
- 32: Dämpfungselement
- 33: Massesegment
- 34: Ringnut
- 35: Massesegment
- 36: Ringnut
- 37: Massesegment
- 38: kugelförmiger Formkörper
- 39: Gehäusewandung
- 40: Dichtring

- L: Längsachse

## Patentansprüche

1. Anordnung (12, 30) umfassend eine Gehäusewandung (14, 39), einen Ultraschallwandler (13,31), und ein Dämpfungselement (19, 32) mit einer Längsachse (L), welches Dämpfungselement (19, 32) den Ultraschallwandler (13, 31) mit der Gehäusewandung (14, 39) verbindet,
wobei der Ultraschallwandler (13, 31) eine mediumsberührende Oberfläche (15) aufweist, von welcher Ultraschallsignale in ein gasförmiges oder flüssiges Medium ausgesandt werden,
wobei das Dämpfungselement (19, 32) vorgesehen ist zur Körperschalldämpfung zwischen dem Ultraschallwandler (13, 31) und der Gehäusewandung (14, 39),
und wobei das Dämpfungselement (19, 32) im Betrieb des Ultraschallwandlers zumindest einen, insbesondere mehrere,
Schwingungsknotenpunkte (27) aufweist
**dadurch gekennzeichnet, dass**
zwischen dem Dämpfungselement (19, 32) und der Gehäusewandung (14, 39) zumindest ein erster Dichtring (21, 40) angeordnet ist, welcher dazu eingerichtet ist, auf der gleichen axialen Position entlang der Längsachse des Dämpfungselements angeordnet zu werden wie der zumindest eine Schwingknotenpunkt (27).

2. Anordnung nach Anspruch 1, **dadurch gekennzeichnet, dass** das Dämpfungselement eine hohlzylindrische und rotationssymmetrische Grundform aufweist

3. Anordnung nach Anspruch 1 oder 2, **dadurch gekennzeichnet, dass** das Dämpfungselement (19, 32) endständig auf einem Torus oder einem kugelförmigen Formkörper (25, 38) aufsitzt.

4. Anordnung nach einem der vorhergehenden Ansprüche, **dadurch gekennzeichnet, dass** die Anordnung (12) zudem zwischen dem Dämpfungselement (19) und der Gehäusewandung (14) ein Dichtelement (24), insbesondere ein rotationssymmetrisches Dichtelement, aufweist, welches sich über einen Bereich von zumindest 20% der Länge des Dämpfungselements (19) zwischen dem Dämpfungselement (19) und der Gehäusewandung (14) erstreckt, wobei der erste Dichtring (21) zwischen dem Dichtelement (24) und dem Dämpfungselement (19) angeordnet ist.

5. Anordnung nach Anspruch 4, **dadurch gekennzeichnet, dass** die Anordnung (12) einen zweiten Dichtring (22) aufweist, welcher zwischen dem Dichtelement (24) und der Gehäusewandung (14) auf Höhe eines Schwingungsknotenpunktes (27) des Dämpfungselements (19) angeordnet ist.

6. Anordnung nach einem der vorhergehenden Ansprüche, **dadurch gekennzeichnet, dass** der erste und/oder der zweite Dichtring (21, 40) ein Rundschnurprofil aufweist.

7. Anordnung nach einem der vorhergehenden Ansprüche, **dadurch gekennzeichnet, dass** das Dämpfungselement (32) zumindest eine, vorzugsweise zumindest zwei, Ringnuten (34) aufweist.

8. Anordnung nach einem der vorhergehenden Ansprüche, **dadurch gekennzeichnet, dass** die Anordnung (12, 30) in einem endständigen Bereich des Dämpfungselements (19, 32) einen geschlossenen Hohlraum aufweist, wobei der erste Dichtring (21, 40) vorgesehen ist, um den Eintritt des Mediums in diesen Hohlraum zu verhindern.

9. Anordnung nach einem der vorhergehenden Ansprüche, **dadurch gekennzeichnet, dass** die Härte des ersten und/oder des zweiten Dichtringes nach DIN EN ISO 868 und/oder DIN ISO 7619-1 60-80 ShA, vorzugsweise 65-75 ShA, beträgt.

10. Anordnung nach einem der vorigen Ansprüche, wobei das Material des Dichtrings vorzugsweise ein siliziumbasierter elastomerer Kunststoff, insbesondere Silikon ist.

11. Ultraschall-Durchflussmessgerät umfassend zumindest eine, insbesondere zwei Anordnungen (12, 30) gemäß Anspruch 1.

## Claims

1. Arrangement (12, 30) comprising a housing wall (14, 39), an ultrasonic converter (13, 31) and a damping element (19, 32) with a longitudinal axis (L), wherein said damping element (19, 32) connects the ultrasonic converter (13, 31) with the housing wall (14, 39),
wherein the ultrasonic converter (13, 31) has a surface in conduct with the medium (15), wherein from said surface ultrasonic signals are emitted to a gaseous or liquid medium,
wherein the damping element (19, 32) is provided for the structure-borne sound attenuation between the ultrasonic converter (13, 31) and the housing wall (14, 39),
and wherein, during the operation of the ultrasonic converter, the damping element (19, 32) has at least one, particularly several, vibration node points (27), **characterized in that**
at least a first sealing ring (21, 40) is arranged between the damping element (19, 32) and the housing wall (14, 39), said sealing ring being designed to be arranged on the same axial position along the longitudinal axis of the damping element as the at least one vibration node point (27).

2. Arrangement as claimed in Claim 1, **characterized in that** the damping element has a hollow cylindrical and rotationally symmetric basic shape.

3. Arrangement as claimed in Claim 1 or 2, **characterized in that** the damping element (19, 32) rests with a terminal end on a torus or a spherical molded body (25, 38).

4. Arrangement as claimed in one of the previous claims, **characterized in that** the arrangement (12) also features a sealing element (24) between the damping element (19) and the housing wall (14), particularly a rotationally symmetric sealing element, which extends over an area of at least 20 % of the length of the damping element (19) between the damping element (19) and the housing wall (14), wherein the first sealing ring (21) is arranged between the sealing element (24) and the damping element (19).

5. Arrangement as claimed in Claim 4, **characterized in that** the arrangement (12) has a second sealing ring (22), which is arranged between the sealing element (24) and the housing wall (14) at the height of a vibration node point (27) of the damping element (19).

6. Arrangement as claimed in one of the previous claims, **characterized in that** the first and/or the second sealing ring (21, 40) has a toroidal profile.

7. Arrangement as claimed in one of the previous claims, **characterized in that** the damping element (32) has at least one, preferably two, ring grooves (34).

8. Arrangement as claimed in one of the previous claims, **characterized in that** the arrangement (12, 30) features a closed cavity at a terminal end of the damping element (19, 32), wherein the first sealing ring (21, 40) is provided to prevent the medium from entering this cavity.

9. Arrangement as claimed in one of the previous claims, **characterized in that** the hardness of the first and/or the second sealing ring according to DIN EN ISO 868 and/or DIN ISO 7619-1 is 60-80 ShA, preferably 65-75 ShA.

10. Arrangement as claimed in one of the previous claims, wherein the material of the sealing ring is preferably a silicon-based elastomer plastic, particularly silicone.

11. Ultrasonic flowmeter comprising at least one, particularly two, arrangements (12, 30) as claimed in Claim 1.

## Revendications

1. Arrangement (12, 30) comprenant une paroi de boîtier (14, 39), un convertisseur ultrasonore (13, 31) et un élément d'amortissement (19, 32) avec un axe longitudinal (L), lequel élément d'amortissement (19, 32) relie le convertisseur ultrasonore (13, 31) avec la paroi de boîtier (14, 39),
le convertisseur ultrasonore (13, 31) présentant une surface en contact avec le produit (15), à partir de laquelle les signaux ultrasonores sont émis dans un produit gazeux ou liquide,
l'élément d'amortissement (19, 32) étant prévu pour l'amortissement du bruit de structure entre le convertisseur ultrasonore (13, 31) et la paroi de boîtier (14, 39), et l'élément d'amortissement (19, 32) présentant, pendant le fonctionnement du convertisseur ultrasonore, au moins un, notamment plusieurs, points de noeud de vibration (27),
**caractérisé**
**en ce qu'**est disposée, entre l'élément d'amortissement (19, 32) et la paroi de boîtier (14, 39) au moins une première bague d'étanchéité (21, 40), laquelle bague est prévue pour être disposée sur la même position axiale - le long de l'axe longitudinal de l'élément d'amortissement - que l'au moins un point de noeud de vibration (27).

2. Arrangement selon la revendication 1, **caractérisé en ce que** l'élément d'amortissement présente une forme de base cylindrique creuse et à symétrie de révolution.

3. Arrangement selon la revendication 1 ou 2, **caractérisé en ce que** l'élément d'amortissement (19, 32) repose avec une zone terminale sur un tore ou sur un corps moulé (25, 38) de forme sphérique.

4. Arrangement selon l'une des revendications précédentes, **caractérisé en ce que** l'arrangement (12) comporte en outre, entre l'élément d'amortissement (19) et la paroi de boîtier (14), un élément d'étanchéité (24), notamment un élément d'étanchéité à symétrie de révolution, lequel élément s'étend sur une zone d'au moins 20 % de la longueur de l'élément d'amortissement (19) entre l'élément d'amortissement (19) et la paroi de boîtier (14), la première bague d'étanchéité (21) étant disposée entre l'élément d'étanchéité (24) et l'élément d'amortissement (19).

5. Arrangement selon la revendication 4, **caractérisé en ce que** l'arrangement (12) présente une deuxième bague d'étanchéité (22), laquelle est disposée entre le premier élément d'étanchéité (24) et la paroi de boîtier (14) à la hauteur d'un point de noeud de vibration (27) de l'élément d'amortissement (19).

6. Arrangement selon l'une des revendications précédentes, **caractérisé en ce que** la première et la deuxième bague d'étanchéité (21, 40) présentent un profil torique.

7. Arrangement selon l'une des revendications précédentes, **caractérisé en ce que** l'élément d'amortissement (32) présente au moins une, de préférence deux, rainures annulaires (34).

8. Arrangement selon l'une des revendications précédentes, **caractérisé en ce que** l'arrangement (12, 30) présente dans une zone terminale de l'élément d'amortissement (19, 32) un espace creux fermé, la première bague d'étanchéité (21, 40) étant prévue pour empêcher la pénétration du produit dans cet espace creux.

9. Arrangement selon l'une des revendications précédentes, **caractérisé en ce que** la dureté de la première et de la deuxième bague d'étanchéité est de 60-80 ShA, de préférence de 65-75 ShA selon DIN EN ISO 868 et/ou DIN ISO 7619-1.

10. Arrangement selon l'une des revendications précédentes, pour lequel le matériau de la bague d'étanchéité est de préférence une matière plastique élastomère à base de silicium, notamment du silicone.

11. Débitmètre à ultrasons comprenant au moins un arrangement, notamment deux arrangements (12, 30) selon la revendication 1.
